# EUROPÄISCHE PATENTSCHRIFT

(11) **EP 0 386 401 B1**
(45) Veröffentlichungstag und Bekanntmachung des Hinweises auf die Patenterteilung: **24.11.1993**
(21) Anmeldenummer: 90100093.5
(22) Anmeldetag: 03.01.1990
(51) Int. Cl.: G01B 11/275

(54) **Vorrichtung zur Messung von Radstellungswerten**
Device for measuring wheel alignment values
Dispositif de mesure de valeurs d'alignement des roues

(30) Priorität: 15.02.1989 DE 3904557
(43) Veröffentlichungstag der Anmeldung: 12.09.1990
(73) Patentinhaber: Beissbarth GmbH, 80993 München (DE)
(72) Erfinder: Henseli, Karl-Heinz, D-8056 Neufahrn (DE)
(74) Vertreter: Herrmann-Trentepohl, Werner, Dipl.-Ing.

(56) Entgegenhaltungen:
- DE-A- 3 523 040
- DE-A- 3 632 806

## Beschreibung

Die vorliegende Erfindung betrifft eine Vorrichtung zur Messung von Radstellungswerten, insbesondere der Stellungswerte der Räder eines Vierradfahrzeuges mittels Meßköpfen und einer Auswertevorrichtung.

Aus der DE-C-29 34 411 ist eine Radstellungsmeßvorrichtung bekannt. Dabei werden sechs Winkelmeßgeräte verwendet, von denen sich jeweils eines an einem Rad eines Vierradfahrzeuges befindet und zwei weitere an den Enden von Tragarmen angeordnet sind, die an den Vorderrädern befestigt sind und in Fahrtrichtung über die Vorderräder hinausstehen. Über eine Rechenschaltung können die von den Winkelmeßgeräten gemesse nen Winkel dahingehend ausgewertet werden, daß sich die Einzelspuren der Räder und die Gesamtspur der Vorder- bzw. Hinterräder ermitteln läßt. Diese Vorrichtung hat den Nachteil, daß es nicht möglich ist, die Radneigungen und damit Sturz, Nachlauf und Spreizung der Räder eines Vierradfahrzeuges zu bestimmen.

Aus der DE-A-35 31 459 ist eine Radeinstellvorrichtung und Verfahren für Fahrzeuge bekannt, bei der eine Vielzahl von an den Fahrzeugrädern montierten Meßköpfen, welche Radeinstelldaten liefern und so ausgestaltet sind, daß sie an den Fahrzeugrädern in einer vorbestimmten Zuordnung zu diesen angeordnet werden können, die notwendigen Daten für ein Einstell-bzw. Ausrichtsystem für Fahrzeugräder liefern. In dieser Offenlegungsschrift ist ein Meßkopf beschrieben, der zur Vermessung horizontaler Winkel einen Infrarotsender bzw. Empfänger aufweist, wobei der Empfänger aus einer Diodenlinie mit 20 bis 30 Dioden besteht. Somit können die an den Rädern angebrachten Meßköpfe optisch miteinander in Verbindung gebracht werden und die zur Ermittlung der Spurwerte notwendigen Daten ermittelt werden. Zur gleichzeitigen Feststellung der Radneigungswerte sind übliche Inklinometer in den Meßkopfen vorgesehen, und alle Daten werden in einer Zentraleinheit ausgewertet. Mit dieser Vorrichtung können zwar alle Radstellungswerte ermittelt werden, jedoch müssen unterschiedliche Sensoren ausgewertet werden, was eine komplizierte Steuerung und Auswertung durch die Zentraleinheit zur Folge hat und eine komplizierte Installation und Justierung nach sich zieht. Aufgrund der Verwendung unterschiedlicher Sensoren ergeben sich auch unterschiedliche Fehlerquellen, weiterhin eine unterschiedliche Bauart der Meßköpfe für die jeweiligen Räder und eine insgesamt unwirtschaftliche Bauart.

Die DE-A-3523040 offenbart eine Radstellungs-Meßvorrichtung gemäß dem Oberbegriff des unhängigen Anspruchs 1.

Der vorliegenden Erfindung liegt daher die Aufgabe zugrunde, eine Radstellungsmeßvorrichtung der o. g. Art vorzuschlagen, die praxisgerecht anzuwenden, d. h. einfach aufgebaut und zu installieren und zu justieren ist, und mit der alle Radstellungswerte sowohl in horizontaler als auch in vertikaler Ebene zu ermitteln sind.

Diese Aufabe wird durch die Merkmale des unabhängigen Anspruches 1 gelöst. Weitere Merkmale und Ausgestaltungen ergeben sich aus den abhängigen Ansprüchen.

In einer vorteilhaften Ausgestaltung der vorliegenden Erfindung wird vorgeschlagen, wenigstens eines der beiden Strahlungsbündel, das horizontale, das vertikale oder beide, mittels entsprechender Einrichtungen derart umzuleiten, daß die Sensorzeile nicht in unnötig komplizierter Weise gedreht bzw. geneigt werden muß.

Um nun eine Messung durchzuführen, verfügt die Auswertevorrichtung über eine Steuereinrichtung, welche in der Lage ist, jeweils eine Strahlenquelle zu aktivieren und die dazugehörige Sensorzeile auszuwerten. Die Verbindung zwischen den Meßköpfen und der Auswertevorrichtung kann in üblicher Weise mittels Leitungen hergestellt werden. Diese Verbindung kann berührungsfrei, beispielsweise optisch oder mittels Funk hergestellt werden.

Zur Ermittlung von Radstellungswerten an Vierradfahrzeugen werden sechs Meßköpfe der oben beschriebenen Art derart angebracht, daß sich an jedem der Räder ein Meßkopf befindet und an jedem der an den Vorderrädern befindlichen Meßköpfe mittels einer starren Achse ein weitere Meßkopf befestigt ist. Die Meßköpfe werden so ausgerichtet, daß alle Vorrichtungen zur Ermittlung von vertikalen Winkeln frei arbeiten können, d. h., daß sich alle Pendelachsen an den Oberseiten der Meßköpfe befinden. Weiterhin werden die auf einer Fahrzeugseite an dem jeweiligen Vorder- bzw. Hinterrad angebrachten Meßköpfe so zueinander ausgerichtet, daß die horizontale Strahlenquelle des einen durch die entsprechende Strahlenempfangsöffnung des anderen strahlen kann und umgekehrt. Die beiden mittels starrer Achsen an den an den Vorderrändern befindlichen Meßköpfen befestigten Meßköpfe werden derart ausgerichtet, daß auch ihre horizontalen Strahlungsquellen und Meßöffnungen zueinander gerichtet sind. Die starren Achsen erstrecken sich über die Vorderkante des Fahrzeuges hinaus und die beiden zusätzlichen Meßköpfe befinden sich in optischer Verbindung vor der Fahrzeugvorderkante.

Um Umweltstöreinflüße auszuschließen wird in vorteilhafter Ausgestaltung vorgeschlagen, daß sich zusätzlich Filter an den Empfangseingangsöffnungen für die horizontalen Strahlungen befinden, um Umgebungslicht wegzufiltern.

In einer weiteren vorteilhaften Ausgestaltung werden die Strahlungen jeweils vor Erreichen der Sensorzeile derart gebündelt, daß ihre Auswertung eindeutig wird.

Als Strahlungsquelle wird in vorteilhafter Weise eine Infrarotstrahlungsquelle vorgeschlagen.

Mittels der in der Auswertevorrichtung befindlichen Steuereinheit läßt sich nun jede Strahlungsquelle aktivieren und die dazugehörige Sensorzeile auswerten.

Die Auswertung der Meßwerte der horizontalen Meßebene dienen zur Ermittlung der Spur der Räder, die Auswertung der Meßwerte der vertikalen Meßebene dienen zur Ermittlung der einzelnen Radneigungen, also des Sturzes und indirekt des Nachlaufes und der Spreizung.

Weitere vorteilhafte Ausgestaltungen der vorliegenden Erfindung ergeben sich aus der folgenden Beschreibung unter Bezug auf die jeweiligen Figuren. Dabei zeigen:
- Fig. 1: eine geschnittene Seitenansicht eines erfindungsgemäßen Meßkopfes
- Fig. 2: eine geschnitte Draufsicht des erfindungsgemäßen Meßkopfes in Fig. 1
- Fig. 3: eine weitere Schnittansicht des erfindungsgemäßen Meßkopfes in Fig. 2, geschnitten an der Stelle A
- Fig. 4: eine geschnittene Seitenansicht eines weiteren Ausführungsbeispiels eines erfindungsgemäßen Meßkopfes.
- Fig. 5: eine geschnittene Seitenansicht eines weiteren Ausführungsbeispieles eines erfindungsgemäßen Meßkopfes
- Fig. 6: eine geschnittene Draufsicht des erfindungsgemäßen Meßkopfes in Fig. 5
- Fig. 7: ein Blockschaltbild eines Ausführungsbeispiels einer Auswerteeinrichtung.

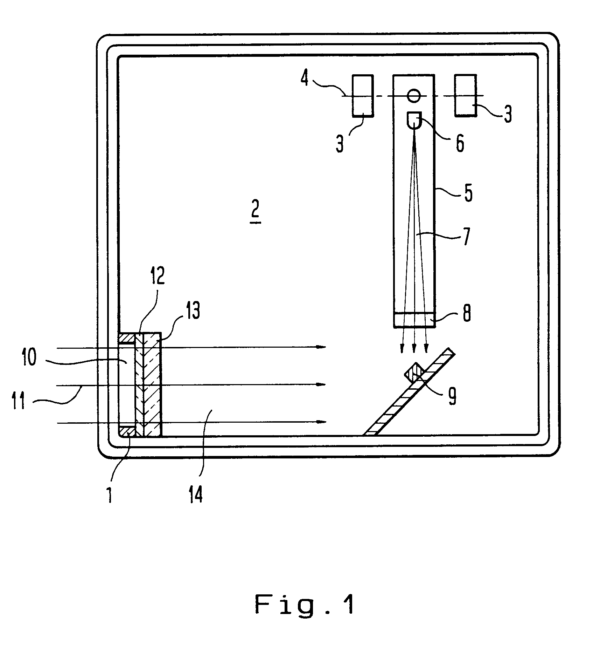

Der in Fig. 1 gezeigte erfindungsgemäße Meßkopf beseht aus dem Gehäuse 1 mit der Rückfront 2. An der Rückfront 2 sind die zwei sich aus der Bildebene heraus erstreckenden Achsträger 3 angebracht, zwischen denen sich die Drehachse 4 befindet. An der Drehachse 4 ist das Gehäuse 5 befestigt, in welchem die Strahlenquelle 6 angeordnet ist, welche die senkrecht nach unten verlaufende Strahlenschar 7 aussendet. Am unteren Ende des Gehäuses 5 ist eine Linse oder strahlenabbildende Vorrichtung 8 angeordnet, welche die vertikale Strahlenschar 7 entsprechend fokussiert, bevor diese auf die Sensorzeile 9 treffen. Die Sensorzeile 9 ist senkrecht zur Pendelachse 4, in diesem Fall senkrecht zur Bildebene, angeordnet. Bei eingeschalteter Strahlenquelle 6 läßt sich der Drehwinkel um die Pendelachse 4 als Vertikalwinkel durch Auswertung der Sensorzeile 9 ermitteln. In dem Gehäuse 1 befindet sich die Öffnung 10, durch welche die horizontale Strahlenschar 11 in das Gehäuseinnere des Meßkopfes eintreten kann. Mit der Filteranordnung 12 können Umweltstöreinflüsse weitestgehend ausgeschaltet werden. Die Strahlenschar 11 wird mittels der Linse oder strichabbildenden Vorrichtung 13 derart focussiert, daß sich die Meßlinienscharr 14 ergibt. Die Meßlinienscharr 14 liegt in einer Ebene, die zu der Meßlinienscharr 7 zumindest parallel verläuft und die Meßlinien 7 und 14 stehen im wesentlichen senkrecht zueinander. Die Sensorzeile 9 ist somit um 45° zu beiden Meßlinienrichtungen geneigt und damit in der Lage, beide auftreffenden Strahlenbündel unabhängig voneinander zu erfassen.

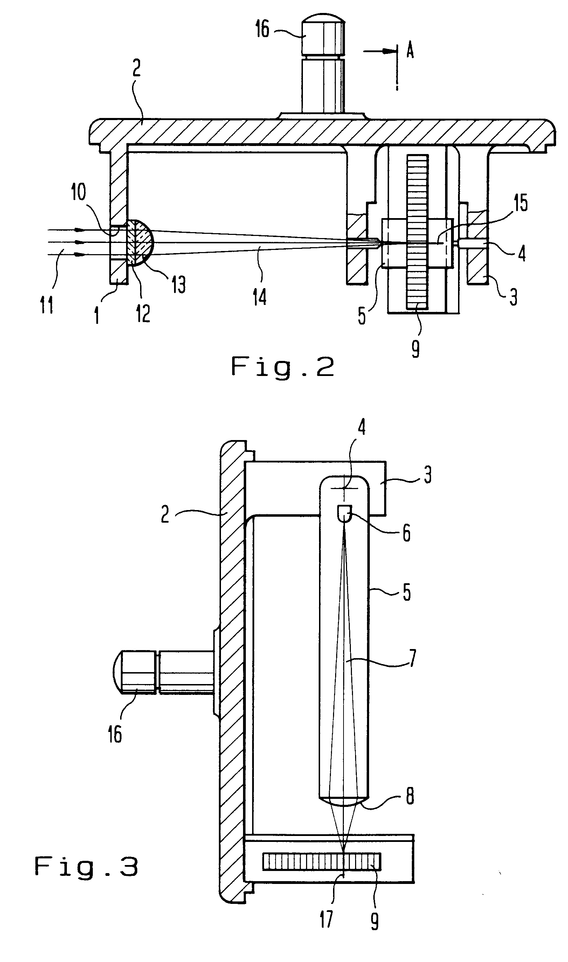

In Fig. 2 ist zu ersehen, wie die eintreffenden horizontalen Strahlen 11 durch die Öffnung 10 in der Gehäusewand 1 in das Innere des Meßkopfes eintreten. Sie passieren den optischen Filter 12 und die Linse 13 und werden zur Meßlinienscharr 14 focussiert. Auf der Sensorzeile 9 ergibt sich somit der Meßstrich 15, welcher ausgewertet einem horizontalem Winkel entspricht. An der Rückwand 2 des Meßkopfes ist die Befestigungsachse 16 angeordnet.

In der Fig. 3, Fig. 2 geschnitten an der Stelle A, ist zu erkennen, wie die im Inneren des als Pendel aufgehängten Gehäuses 5 angeordnete Strahlenquelle 6 die vertikale Strahlenschar 7 aufwendet, welche durch die Linse 8 derart focussiert werden, daß die Strahlenschar als Meßstrich 17 ebenfalls auf der gleichen Sensorzeile dargestellt und als vertikaler Winkel auswertbar sind.

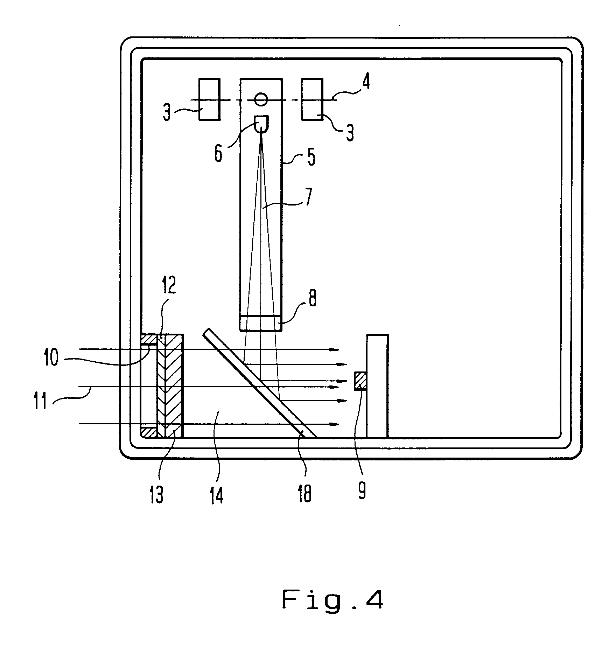

In dem in Fig. 4 gezeigten Ausführungsbeispiel eines Meßkopfes werden die von der im als Pendel aufgehängten Gehäuse 5 angeordneten Strahlenquelle 6 ausgesendeten vertikalen Strahlen 7 mittels des halbdurchlässigen Spiegels 18 in die zur horizontalen Strahlenschar 14 parallele Richtung gebracht. Die horizontale Strahlung 11 tritt wiederum durch die Öffnung 10, die optischen Filter 12 und die Linse oder die strichabbildende Vorrichtung 13 ein und durchdringt den halbdurchlässigen Spiegel 18. Da nunmehr beide Strahlungen in der gleichen Richtung wirken, kann die Sensorzeile wie gezeigt in waagerechte Empfangsposition, also senkrecht zur Bildebene, aufgestellt werden.

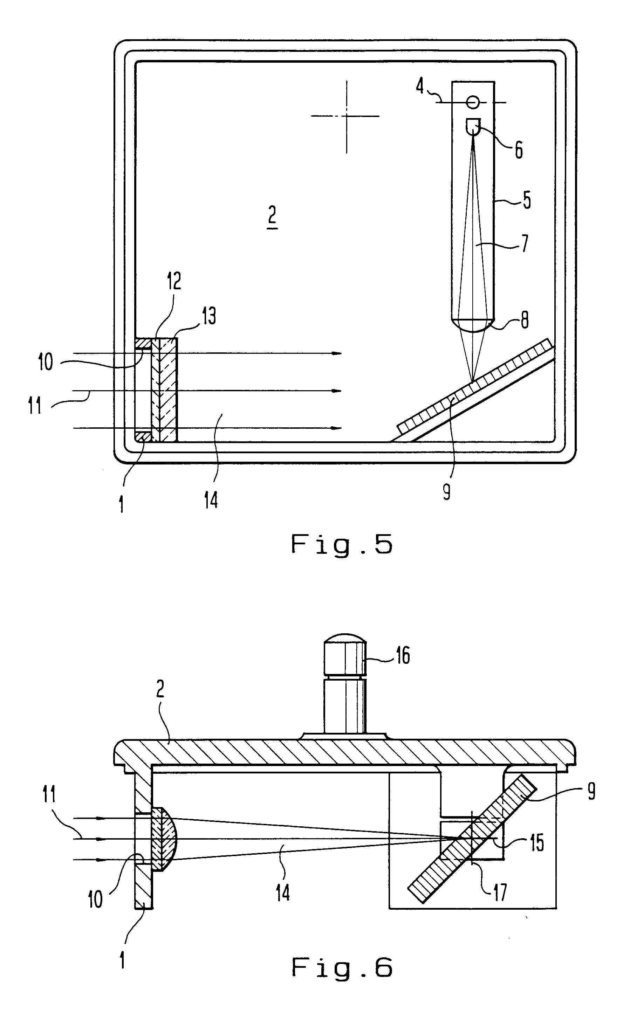

Während in den bisher beschriebenen Ausführungsbeispielen die Pendelachse 4 des die vertikale Strahlen 7 aussendende Strahlenquelle 6 beinhaltenden Gehäuses 5 im wesentlichen parallel zur eintreffenden horizontalen Strahlung 11 verlief, zeigt Fig. 5 ein Ausführungsbeispiel eines Meßkopfes, in dem die horizontale Strahlung 11 und die Pendelachse 4 der Strahlenquelle 6 senkrecht zueinander stehen. Das heißt, die Pendelachse 4 steht senkrecht zur Bildebene. Die in dem als Pendel an der Achse 4 befestigten Gehäuse 5 befindliche Strahlenquelle 6 sendet die vertikalen Strahlen 7 aus, welche durch die Linse 8 focussiert werden. Durch die Öffnung 10 im Gehäuse 1 tritt die horizontale Strahlenschar 11 in das Meßkopfinnere ein und passiert dabei die Filter 12 und die Linse 13 und wird somit zur Meßlinienscharr 14 focussiert. Die Meßlinienscharr 7 und die Meßlinienscharr 14 stehen senkrecht zueinander und liegen zudem in senkrecht zueinander stehenden Ebenen. Somit genügt es nicht, die Sensorzeile 9 nur wie in Fig. 1 bis 3 gezeigt, jeweils 45° zur Strahlenrichtung geneigt aufzustellen, sondern sie muß noch weiterhin um vorzugsweise 45° gedreht werden, wie in Fig. 6 gezeigt. Somit lassen sich die horizontalen Strahlen 14 mittels der Sensorzeile 9 auswerten (Meßstrich 15) und ebenso die vertikalen auftreffenden Strahlen (Meßstrich 17).

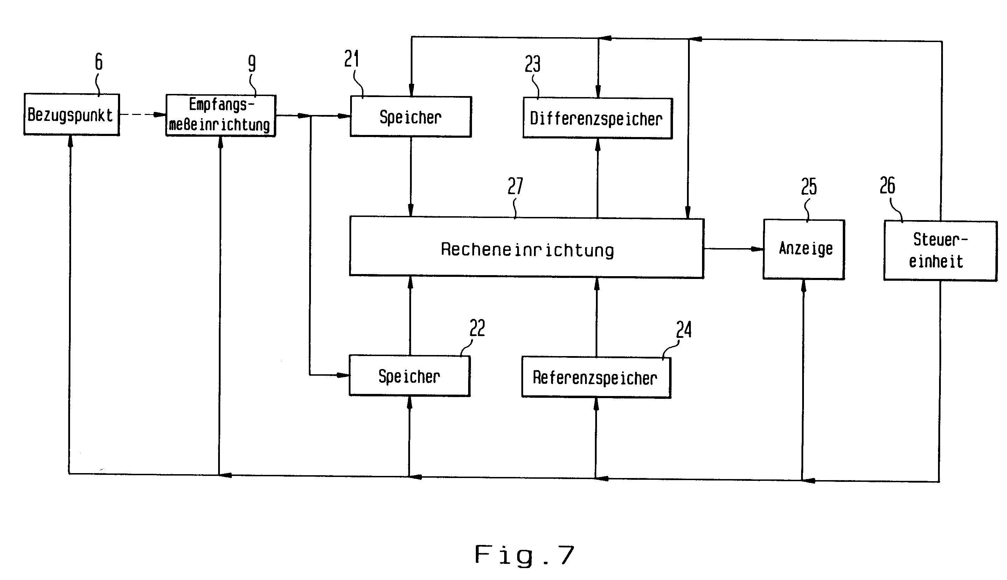

Mit einer Auswertevorrichtung gemäß dem Blockschaltbild in Fig. 7 kann nun eine Strahlenquelle 6 und die dazugehörige Sensorzeile 9 durch die Steuereinheit 26 aktiviert werden. Zunächst aktiviert die Steuereinheit nur die Sensorzeile und speichert den Empfangsmeßwert in dem Speicher 21. Nun aktiviert die Steuereinheit 26 auch die Strahlenquelle 6 und speichert den Empfangsmeßwert in den Speicher 22. Über die Recheneinrichtung 27 läßt sich nun der Empfangsmeßwert in Speicher 22 um den Korrekturwert in Speicher 21 korrigieren. In dem Referenzspeicher 24 sind die einmal eingestellten Referenzwerte gespeichert. Die Differenz zwischen den um den Speicherwert 21 bereinigten Speicherwert 22 und dem Referenzspeicherwert 24, welche in der Recheneinrichtung 27 gebildet wird, kann nun direkt zur Anzeige 25 geleitet werden oder in einem Differenzspeicher 23 zunächst abgespeichert werden. Diese Abläufe werden über Steuereinheit 26 gesteuert.

## Patentansprüche

1. Radstellungs-Meßvorrichtung mit an den Fahrzeugrädern angebrachten Meßköpfen (1,2), die jeweils eine Vorrichtung zur Ermittlung von vertikalen Winkeln und eine Vorrichtung zur Ermittlung von horizontalen Winkeln aufweisen, wobei die Vorrichtung zur Ermittlung von horizontalen Winkeln eine außerhalb des Meßkopfes angeordnete Bezugsstrahlenquelle mit einem horizontalen Strahl (11) und eine Sensorzeile für den horizontalen Strahl aufweist, und mit einer Auswertevorrichtung, **dadurch gekennzeichnet,** daß die Vorrichtung zur Ermittlung von vertikalen Winkeln ein am Meßkopf um eine Achse (4) frei beweglich aufgehängtes Pendel (15) mit einer Strahlenquelle (6) mit einem vertikalen Strahl (7) und eine Sensorzeile für den vertikalen Strahl aufweist, und daß beide Sensorzeilen zu einer Sensorzeile (9) zusammengefaßt sind, die im Schnittbereich horizontaler (14) und vertikaler (7) Strahlen zur berührungslosen Ermittlung horizontaler und vertikaler Winkel angeordnet ist.

2. Vorrichtung nach Anspruch 1, **dadurch gekennzeichnet,** daß die horizontalen (11) und/oder vertikalen (7) Strahlen vor Erreichen der Sensorzeile (9) durch eine Linse (8,13) focussiert werden.

3. Vorrichtung nach Anspruch 1, **dadurch gekennzeichnet,** daß die horizontalen (11) und/oder vertikalen (7) Strahlen vor Erreichen der Sensorzeile (9) durch eine strichabbildende Vorrichtung (8,13) geleitet werden.

4. Vorrichtung nach Anspruch 1, **dadurch gekennzeichnet,** daß die auf die Sensorzeile (9) auftreffenden horizontalen (14) und vertikalen (7) Meßlinien in parallelen Ebenen senkrecht zueinander liegen.

5. Vorrichtung nach Anspruch 4, **dadurch gekennzeichnet,** daß die Sensorzeile (9) in einer Linie senkrecht zu den Strahlenebenen der Meßlinien in einem Empfangswinkel von vorzugsweise jeweils 45° zur Meßlinienrichtung angebracht ist.

6. Vorrichtung nach Anspruch 1, **dadurch gekennzeichnet,** daß die auf die Sensorzeile (9) auftreffenden horizontalen (14) und vertikalen (7) Meßlinien in vorzugsweise senkrecht zueinander stehenden Ebenen liegen.

7. Vorrichtung nach Anspruch 6, **dadurch gekennzeichnet,** daß die Sensorzeile (9) von vorzugsweise 45° zu beiden Meßlinienebenen in einem Empfangswinkel von vorzugsweise jeweils 45° zu Meßlinienrichtung angebracht ist.

8. Vorrichtung nach Anspruch 1, **dadurch gekennzeichnet,** daß wenigstens eine der auf die Sensorzeile (9) auftreffenden horizontalen (14) oder vertikalen (7) Meßlinien mittels geeigneter Einrichtungen (18), wie halbdurchlässige Spiegel, Prismen und dergleichen, so umgeleitet wird, daß beide Meßlinien in der gleichen Ebene und der gleichen Richtung liegen.

9. Vorrichtung nach Anspruch 8, **dadurch gekennzeichnet,** daß die Sensorzeile (9) in einer Linie senkrecht zur Strahlenebene der Meßlinien in einem Empfangswinkel von vorzugsweise 90° zur Meßlinienrichtung angebracht ist.

10. Vorrichtung nach wenigstens einem der vorhergehenden Ansprüche, **dadurch gekennzeichnet,** daß die Strahlenquellen (6) optisch auswertbare, vorzugsweise im Infrarotbereich liegende Strahlen aussenden.

11. Vorrichtung nach wenistens einem der vorhergehenden Ansprüche, **dadurch gekennzeichnet,** daß die Sensorzeile (9) eine CCD-Zeile ist.

12. Vorrichtung nach wenistens einem der vorhergehenden Ansprüche, **dadurch gekennzeichnet,** daß die Sensorzeile (9) ein optischer Analogsensor zur Winkelerkennung ist.

13. Vorrichtung nach wenistens einem der vorhergehenden Ansprüche, **dadurch gekennzeichnet,** daß die Sensorzeile (9) eine Zeile Fotosensoren ist.

14. Vorrichtung nach wenistens einem der vorhergehenden Ansprüche, **dadurch gekennzeichnet,** daß vor der Sensorzeile (9) optische Filter (12) zur Unterdrückung von störenden Fremdeinflüssen angeordnet sind.

15. Vorrichtung nach Anspruch 1, **dadurch gekennzeichnet,** daß die Auswerteeinrichtung eine elektronische Verarbeitungsanlage ist, die wenigstens einen Speicher (21, 22, 23, 24), vorzugsweise RAM, aufweist, in dem einmal als Bezug für die Messungen festgelegte Referenzmeßwerte gespeichert werden.

16. Vorrichtung nach Anspruch 15, **dadurch gekennzeichnet,** daß die Ergebniswerte in der Auswerteeinrichtung gespeichert, als Winkel oder Wert angezeigt oder zu weiteren Berechnungen herangezogen werden.

17. Vorrichtung nach Anspruch 1, **dadurch gekennzeichnet,** daß an jedem Fahrzeugrad ein Meßkopf derart angeordnet ist, daß die horizontalen Strahlenquellen zweier auf der gleichen Fahrzeugseite befindlichen Meßköpfe zueinandergerichtet sind und die Strahlen (11) von einem Meßkopf zum anderen gelangen können, und daß an den beiden an den Vorderrädern befindlichen Meßköpfen mittels starrer Achsen jeweils ein weiterer Meßkopf derart befestigt ist, daß die horizontalen Strahlenquellen der beiden zusätzlichen Meßköpfe zueinandergerichtet sind und die Strahlen (11) von einem Meßkopf zum anderen gelangen können.

18. Vorrichtung nach wenigstens einem der vorhergehenden Ansprüche, **dadurch gekennzeichnet,** daß die horizontalen Strahlenquellen und die Sensorzeilen (9) eine horizontale Meßebene zur Spurvermessung bilden, und daß die vertikalen Strahlenquellen und die Sensorzeilen (9) eine vertikale Meßebene bilden, wobei aus den vertikalen Meßebenenanteilen der zusätzlichen Meßköpfe die Spreizung, aus den vertikalen Meßebenenanteilen der Meßköpfe an den Vorderrädern Sturz und Nachlauf der Vorderräder und aus den vertikalen Meßebenenanteilen der Meßköpfe an den Hinterrädern der Sturz der Hinterräder ermittelt werden.

## Claims

1. A wheel position measuring device, comprising measuring heads (1, 2) disposed on the vehicle wheels and each comprising a device for detecting vertical angles and a device for detecting horizontal angles, the horizontal angle detecting device comprising a reference beam source disposed outside the measuring head and having a horizontal beam (11), and a sensor line for the horizontal beam, and comprising an evaluation device, characterised in that the vertical angle detecting device comprises a pendulum (15) suspended from the measuring head so as to be freely movable about an axis (4) and having a beam source (6) with a vertical beam (7) and a sensor line for the vertical beam, and in that the two sensor lines are combined to form one sensor line (9) which is disposed in the zone of intersection of the horizontal and vertical beams (14 and 7 respectively) for contactless detection of horizontal and vertical angles.

2. A device according to claim 1, characterised in that the horizontal and/or vertical beams (11; 7 respectively) are focused by a lens (8, 13) before reaching the sensor line (9).

3. A device according to claim 1, characterised in that the horizontal and/or vertical beams (11; 7 respectively) are passed through a line-imaging device (8, 13) before reaching the sensor line (9).

4. A device according to claim 1, characterised in that the horizontal and vertical measurement lines (14; 7 respectively) meeting the sensor line (9) are situated in parallel planes perpendicularly to one another.

5. A device according to claim 4, characterised in that the sensor line (9) is disposed in a line perpendicular to the beam planes of the measurement lines at a reception angle of preferably 45° in each case to the direction of the measurement line.

6. A device according to claim 1, characterised in that the horizontal and vertical measurement lines (14; 7 respectively) meeting the sensor line (9) are situated in planes preferably perpendicular to one another.

7. A device according to claim 6, characterised in that the sensor line (9) of preferably 45° to the two measurement line planes is disposed at a reception angle of preferably 45° in each case to the direction of the measurement lines.

8. A device according to claim 1, characterised in that at least one of the horizontal or vertical measurement lines (14; 7 respectively) meeting the sensor line (9) is so deflected by suitable means (18) such as semi-transparent mirrors, prisms and the like, that the two measurement lines are situated in the same plane and the same direction.

9. A device according to claim 8, characterised in that the sensor line is disposed in a line perpendicular to the beam plane of the measurement lines at a reception angle of preferably 90° to the direction of the measurement lines.

10. A device according to at least one of the preceding claims, characterised in that the beam sources (6) emit optically evaluatable beams preferably in the infrared range.

11. A device according to at least one of the preceding claims, characterised in that the sensor line (9) is a CCD line.

12. A device according to at least one of the preceding claims, characterised in that the sensor line (9) is an optical analog sensor for angle detection.

13. A device according to at least one of the preceding claims, characterised in that the sensor line (9) is a line of photosensors.

14. A device according to at least one of the preceding claims, characterised in that optical filters (12) are disposed in front of the sensor line (9) to suppress interference from extraneous sources.

15. A device according to claim 1, characterised in that the evaluation device is an electronic processing installation comprising at least one memory (21, 22, 23, 24), preferably a RAM, in which there are stored reference measurement data determined once as a reference for the measurements.

16. A device according to claim 15, characterised in that the results are stored in the evaluation device, displayed as an angle or value, or used for further calculations.

17. A device according to claim 1, characterised in that a measuring head is so disposed on each vehicle wheel that the horizontal beam sources of two measuring heads on the same vehicle side are directed towards one another and the beams (11) can pass from one measuring head to the other, and in that another measuring head in each case is fixed on the two front-wheel measuring heads by means of rigid spindles, in such a manner that the horizontal beam sources of the two additional measuring heads are directed towards one another and the beams (11) can pass from one measuring head to the other.

18. A device according to at least one of the preceding claims, characterised in that the horizontal beam sources and the sensor lines (9) form a horizontal measuring plane for track measurement, and in that the vertical beam sources and the sensor lines (9) form a vertical measuring plane, the king pin inclination angle being determined from the vertical measuring plane components of the additional measuring heads, the front wheel camber and caster being determined from the vertical measuring plane components of the front-wheel measuring heads, and the rear wheel camber being determined from the vertical measuring plane components of the rear-wheel measuring head.

## Revendications

1. Dispositif de mesure de position ou d'alignement de roues avec des têtes de mesure (1, 2) disposées sur les roues de véhicule, qui présente respectivement un dispositif pour déterminer des angles verticaux et un dispositif pour déterminer des angles horizontaux, le dispositif pour la détermination d'angles horizontaux présentant une source de rayonnement de référence agencée à l'extérieur de la tête de mesure avec rayonnement horizontal (11) et une ligne de capteur pour le rayonnement horizontal et avec un dispositif d'évaluation, caractérisé en ce que le dispositif pour la détermination d'angles verticaux présente un axe pendulaire suspendu de façon librement mobile autour d'un axe (4) sur la tête de mesure avec une source de rayonnement (6) pour le rayonnement vertical (7) et une ligne de capteurs pour le rayonnement vertical, et en ce que les deux lignes de capteurs sont regroupées en une ligne de capteurs (9) qui est agencée dans la zone d'intersection du rayonnement horizontal (14) et du rayonnement vertical (17) pour la détermination sans contact d'angles horizontaux et verticaux.

2. Dispositif selon la revendication 1, caractérisé en ce que le rayonnement horizontal (11) et/ou le rayonnement vertical (7) sont focalisés avant d'atteindre la ligne de capteurs (9) par une lentille (8, 13).

3. Dispositif selon la revendication 1, caractérisé en ce que le rayonnement horizontal (11) et/ou le rayonnement vertical (7) sont dirigés avant d'atteindre la ligne de capteurs (9) par un dispositif représenté par des traits (8, 13).

4. Dispositif selon la revendication 1, caractérisé en ce que les lignes de mesure horizontales (14) et verticales (7) venant en incidence sur la ligne de capteurs (9) se situent perpendiculairement entre elles dans des plans parallèles.

5. Dispositif selon la revendication 4, caractérisé en ce que la ligne de capteurs (9) est disposée dans une ligne perpendiculaire au plan de rayonnement des lignes de mesure dans un angle de réception de préférence respectivement de 45° par rapport à la direction des lignes de mesure.

6. Dispositif selon la revendication 1, caractérisé en ce que les lignes de mesure horizontales (14) et verticales (7) venant en incidence sur la ligne de capteurs (9) se situent de préférence dans des plans perpendiculaires entre eux.

7. Dispositif selon la revendication 6, caractérisé en ce que la ligne de capteurs (9) est disposée préférentiellement à 45° par rapport aux deux plans de lignes de mesure dans un angle de réception de préférence respectivement de 45° par rapport au dispositif de lignes de mesure.

8. Dispositif selon la revendication 1, caractérisé en ce qu'au moins l'une des lignes de mesure horizontales (14) ou verticales (7) venant en incidence sur la ligne de capteurs (9) est déviée au moyen de dispositifs appropriés (18) tels que des miroirs semi-transparents, des prismes et analogues de sorte que les deux lignes de mesure se situent dans le même plan et dans la même direction.

9. Dispositif selon la revendication 8, caractérisé en ce que la ligne de mesure (9) est disposée dans une ligne perpendiculaire au plan de rayonnement des lignes de mesure dans un angle de réception préférentiellement de 90° par rapport à la direction des lignes de mesure.

10. Dispositif selon au moins l'une des revendications précédentes, caractérisé en ce que les sources de rayonnement (6) émettent des rayonnements situés de préférence dans la plage des infrarouges, exploitables optiquement.

11. Dispositif selon au moins l'une des revendications précédentes, caractérisé en ce que la ligne de capteurs (9) est une ligne CCD.

12. Dispositif selon au moins l'une des revendications précédentes, caractérisé en ce que la ligne de capteurs (9) est un capteur analogique optique pour la reconnaissance des angles.

13. Dispositif selon au moins l'une des revendications précédentes, caractérisé en ce que la ligne de capteurs (9) est une ligne de photocapteurs.

14. Dispositif selon au moins l'une des revendications précédentes, caractérisé en ce qu'en amont de la ligne de capteurs (9) sont agencés des filtres optiques pour atténuer les interférences étrangères.

15. Dispositif selon la revendication 1, caractérisé en ce que le dispositif d'évaluation est un système de traitement électronique qui comporte au moins une mémoire (21, 22, 23, 24), de préférence RAM, dans laquelle sont stockées des valeurs de mesure de référence définies en tant que références pour les mesures.

16. Dispositif selon la revendication 15, caractérisé en ce que les valeurs de résultat stockées dans le dispositif d'évaluation sont affichées sous forme d'angles ou de valeurs ou peuvent être utilisées pour d'autres calculs.

17. Dispositif selon la revendication 1, caractérisé en ce que pour chaque roue de véhicule est agencée une tête de mesure de telle façon que les sources de rayonnement horizontal de deux têtes de mesure se trouvant sur le même côté du véhicule sont dirigées l'une vers l'autre et le rayonnement (11) d'une tête de mesure peut parvenir à l'autre tête de mesure et en ce que sur les deux têtes de mesure situées sur les roues avant sont fixées respectivement au moyen d'axes rigides une tête de mesure supplémentaire, en ce que les sources de rayonnement horizontal des deux têtes de mesure supplémentaires sont dirigées l'une vers l'autre et le rayonnement (11) peut être amené d'une tête de mesure à l'autre tête de mesure.

18. Dispositif selon au moins l'une des revendications précédentes, caractérisé en ce que les sources de rayonnement horizontal et la ligne de capteurs (9) forment un plan de mesure horizontal pour la mesure de l'écartement et en ce que les sources de rayonnement vertical et les lignes de capteurs (9) forment un plan de mesure vertical, à partir des portions de plans de mesure verticaux des têtes de mesure supplémentaires il est possible de déterminer l'inclinaison des pivots des roues de direction, à partir des portions de plans de mesure verticaux des têtes de mesure sur les roues avant il est possible de calculer le carrossage et la chasse des roues avant et à partir des portions de plans de mesure verticaux des têtes de mesure sur les roues arrière, il est possible de déterminer le carrossage des roues arrière.
